# EUROPEAN PATENT SPECIFICATION

(11) **EP 2 187 325 B1**
(45) Date of publication and mention of the grant of the patent: **14.03.2018**
(21) Application number: 08829921.9
(22) Date of filing: 01.09.2008
(51) Int. Cl.: G06F 17/50, G06T 19/00, G06T 17/20, A41H 3/00

(54) **GARMENT FIT SIMULATION DEVICE, GARMENT FIT SIMULATION METHOD AND GARMENT FIT SIMULATION PROGRAM**
VORRICHTUNG ZUR SIMULATION EINER KLEIDUNGSPASSFORM, VERFAHREN ZUR SIMULATION EINER KLEIDUNGSPASSFORM UND PROGRAMM ZUR SIMULATION EINER KLEIDUNGSPASSFORM
DISPOSITIF DE SIMULATION D'AJUSTEMENT D'UN VÊTEMENT, PROCÉDÉ DE SIMULATION D'AJUSTEMENT D'UN VÊTEMENT ET PROGRAMME DE SIMULATION D'AJUSTEMENT D'UN VÊTEMENT

(30) Priority: 04.09.2007 JP 2007228508
(43) Date of publication of application: 19.05.2010
(73) Proprietor: Shima Seiki Manufacturing., Ltd., Wakayama-shi, Wakayama 641-0003 (JP)
(72) Inventor: NAKAMURA, Toshinori, Wakayama-shi Wakayama 641-0003 (JP); NAKAMURA, Atsushi, Wakayama-shi Wakayama 641-0003 (JP)
(74) Representative: Wagner, Karl H.
(86) International application number: PCT/JP2008/065649
(87) International publication number: WO 2009/031491

(56) References cited:
- JP-A- 2000 331 058
- JP-A- 2001 262 416
- FUHRMANN A ET AL: "Interaction-free dressing of virtual humans", COMPUTERS AND GRAPHICS, ELSEVIER, GB, vol. 27, no. 1, 1 February 2003 (2003-02-01), pages 71-82, XP004405352, ISSN: 0097-8493, DOI: 10.1016/S0097-8493(02)00245-5
- YING YANG ET AL: "THREE-DIMENSIONAL GARMENT DESIGN AND ANIMATION. \A NEW DESIGN TOOL FOR THE GARMENT INDUSTRY", COMPUTERS IN INDUSTRY, ELSEVIER SCIENCE PUBLISHERS. AMSTERDAM, NL, vol. 19, no. 2, 1 May 1992 (1992-05-01), pages 185-191,193, XP000270070, ISSN: 0166-3615, DOI: 10.1016/0166-3615(92)90021-E

## Description

The present invention relates to dressing simulation and particularly to a series of processes up to the joining of parts at the periphery of a human body model.

Patent Documents 1 and 2 (Japanese Patent Application Publication No. H10-134095 and Japanese Patent Application Publication No. 2000-3383) disclose simulation of dressing a human body model in a garment. The garment is composed of a plurality of parts, and when the garment comes into contact with the human body model, the garment is moved by the repulsion force of the human body model. In this simulation the parts are arranged at the periphery of the human body model, the joining relationship between the parts is specified, and then the parts are virtually stitched together. Stitching the parts together is referred to as "joining" in this specification. Next, dressing of the garment is simulated in consideration of a variety of forces acting on the garment. The forces acting on the garment include a strain associated with deformation of the garment, repulsion force generated from the human body model, gravity acting on the garment, frictional force between the garment that is caused when the garment is deformed, and frictional force between the garment and the human body model.

It is difficult to arrange the parts in proximity to the periphery of the human body model. However, if the initial arrangement of the parts is far from the human body model, the process for virtually joining the parts requires longer time. Moreover, it was found that if the parts are arranged unnaturally at the time of joining, drapes and the like of the garment are formed unnaturally during simulation. This is considered to occur because the drapes are formed by weak force, such as the gravity or frictional force acting on the garment, and consequently the original shape of the garment at the time of joining becomes unnatural, making the drapes unnatural. Furthermore, the formation of the drapes is associated with the fact that the garment sags by gravity. Therefore, it is considered that the drapes are formed unnaturally if the garment not formed so as to be able to sag slightly when joining the parts. For this reason, it is necessary to reduce the time required for the simulation by allowing the parts to be arranged easily at the periphery of the human body model and facilitating a series of processes up to the joining. It is also necessary to allow the parts to be formed naturally at the periphery of the human body model and to express the drapes and the like through simulation.
Patent Document 1: Japanese Patent Application Publication No. H10-134095
Patent Document 2: Japanese Patent Application Publication No. 2000-3383

Prior art document Fuhrmann A. et al.: "Interaction-free dressing of virtual humans", Computers and Graphics, Elsevier, GB, vol. 27, no. 1, 1 February 2003 (2003-02-01), pages 71-82, XP004405352, ISSN: 0097-8493, DOI: 10.1016/S0097-8493(02)00245-5 discloses an interaction-free method for a geometric pre-positioning of virtual close patterns with human 3 D scans, the method comprising the moving of the ends of a plurality of parts toward a virtual joining portion, moving other parts of the plurality of parts in accordance with positions of the end and repeating the generation of the virtual joining portion.

From Ying Yang et al.: "Three-dimensional garment design and animation. A New Design Tool for the Garment industry", Computers in Industry, Elsevier Science Publishers, Amsterdam, NL, vol. 19, no. 2, 1 May 1992 (1992-05-01), pages 185-191, 193, XP000270070, ISSN: 0166-3615, DOI: 10.1016/0166-3615(92)90021-E a method for the interactive design of garments in three dimensions is known, which makes use of an elastic surface model allowing to examining the garment design in the three dimensions dynamically.

An object of the present invention is to allow the execution of a series of steps up to the virtual joining of parts in a short period of time, as well as to form the natural shape of a garment at the time of joining.

This and other objects are solved by a dressing simulation apparatus having the features as set forth in claim 1. Preferred embodiments of the dressing simulation apparatus are stated in the subclaims 2 and 3. Furthermore, the object is also met both by a dressing simulation method according to claim 4 and a dressing simulation program as defined in claim 5.

In a dressing simulation apparatus for joining virtual parts of a garment that are arranged at the periphery of a human body model, and simulating dressing of the human body model in the virtual garment obtained after the joining, the present invention is defined by the independent claims 1, 4 and 5. Preferred embodiments are described in the dependent claims 2 and 3.

Fig. 1 is a block diagram of a dressing simulation apparatus of an embodiment;
Fig. 2 is a flowchart showing a dressing simulation method of the embodiment;
Fig. 3 is a block diagram of a dressing simulation program of the embodiment;
Fig. 4 is a diagram schematically showing the initial movement in the embodiment;
Fig. 5 is a diagram schematically showing the movement toward a joining line in the embodiment;
Fig. 6 is a diagram showing an example of dressing simulation performed in the embodiment;
Fig. 7 is a diagram showing another example of the dressing simulation performed in the embodiment;
Fig. 8 is a diagram showing an enlargement an initial state shown in Fig. 7;
Fig. 9 is a diagram showing a step subsequent to Fig. 8;
Fig. 10 is a diagram showing a step subsequent to Fig. 9;
Fig. 11 is a diagram showing a step subsequent to Fig. 10;
Fig. 12 is a diagram showing a step subsequent to Fig. 11; and
Fig. 13 is a diagram showing a step subsequent to Fig. 12.

- 2: Dressing simulation apparatus
- 4: Manual input
- 6: Image input/output
- 8: Color monitor
- 10: Color printer
- 12: Memory
- 14: Collision detection unit
- 16: Moving unit
- 18: Initial movement unit
- 20: Joining line processing unit
- 22: Main simulation unit
- 24: Polygon management unit
- 31: Joining line processing instruction
- 32: Collision detection instruction
- 33: Initial movement instruction
- 34: Movement instruction
- 35: Main simulation instruction
- 36: Polygon management instruction
- 40: Human body model
- 41: Axis
- 42 to 44: Parts
- 45, 46: Joining lines
- 47: Part

The best mode for implementing the present invention is now described hereinafter.

### EMBODIMENT

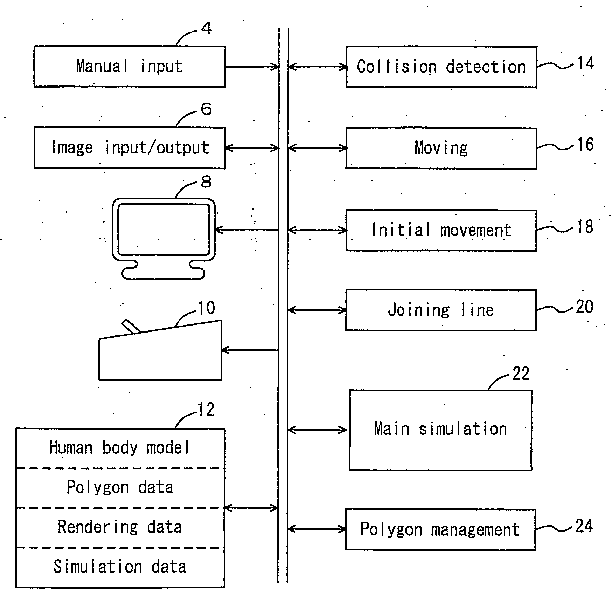

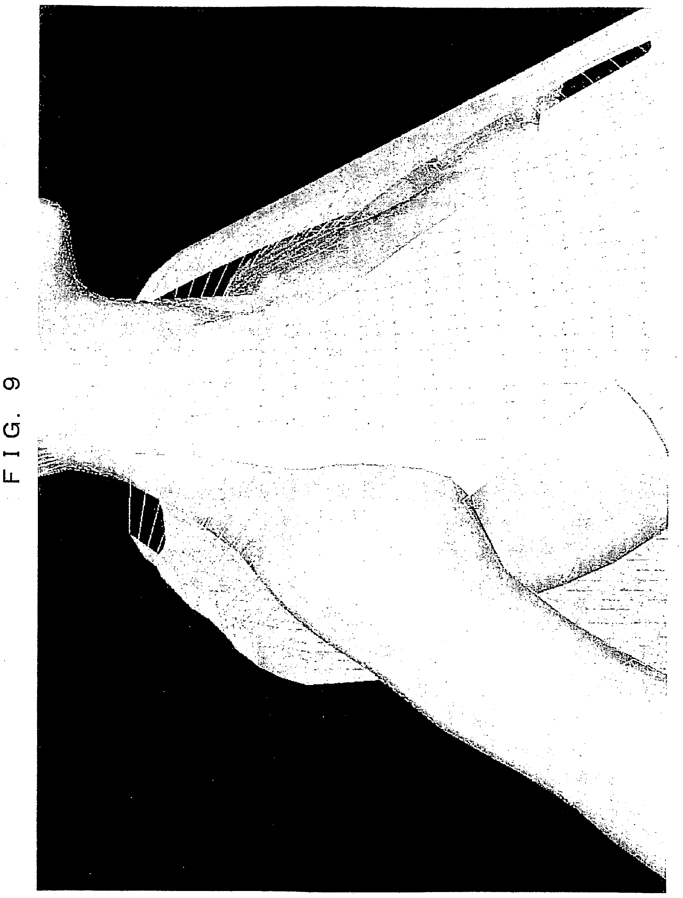

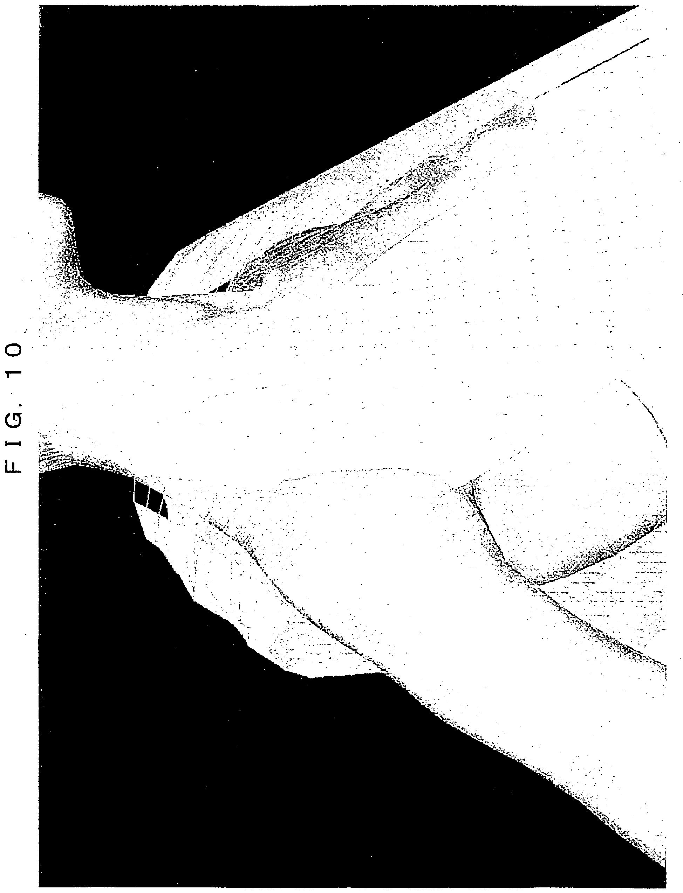

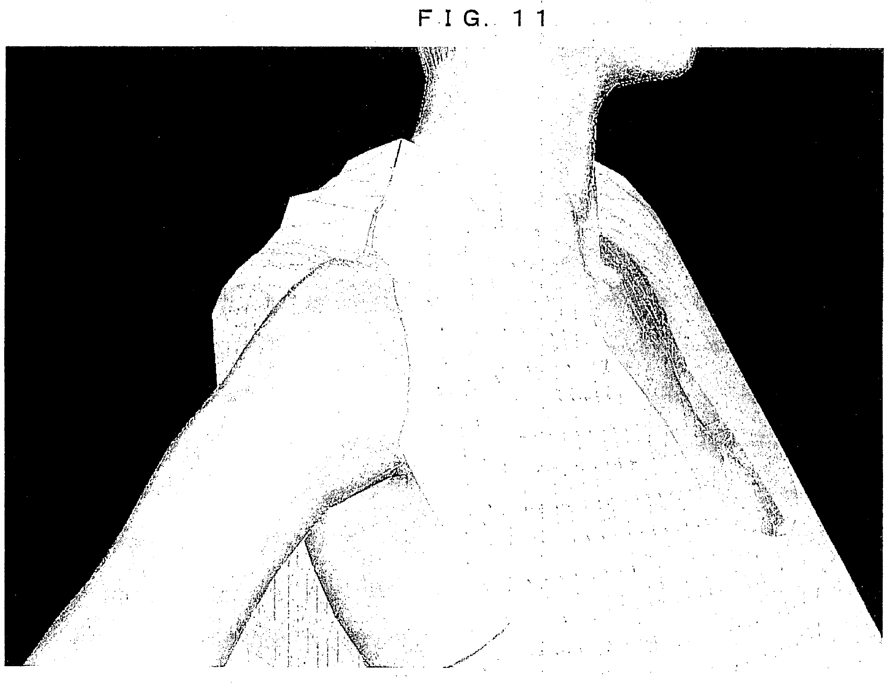

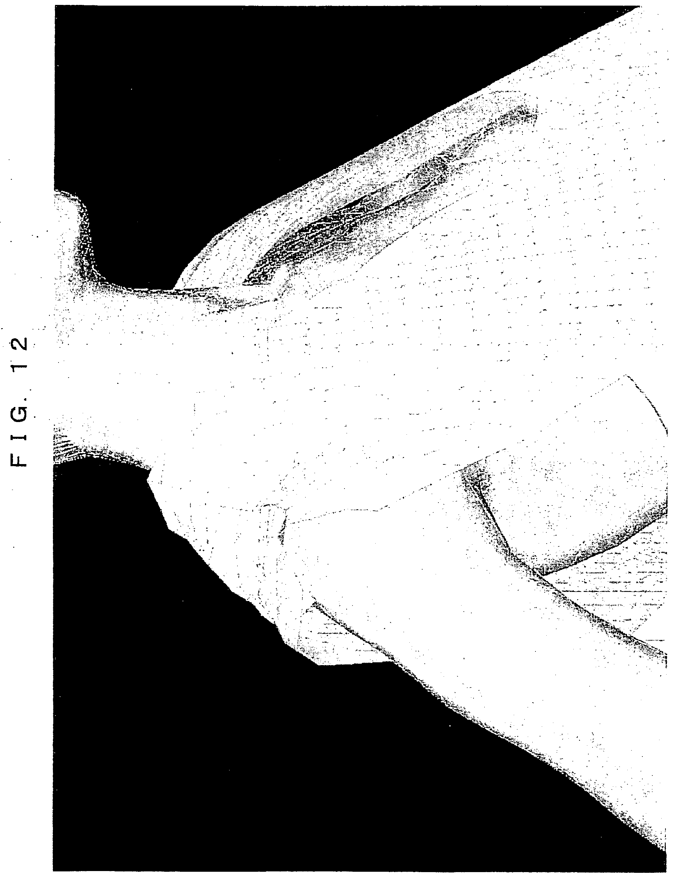

Figs. 1 to 13 show dressing simulation of an embodiment. In Fig. 1, reference numeral 2 represents a dressing simulation apparatus, and 4 a manual input, such as a keyboard, mouse, trackball, and stylus Reference numeral 6 represents an image input/output such as a disc driver or network interface for inputting/outputting image data. Reference numeral 8 is a color monitor, and 10 a color printer. Reference numeral 12 is a memory that stores three-dimensional data of a human body model, polygon data of each part configuring a garment, data for rending the garment configured by a plurality of polygons, as well as three-dimensional image data of a simulation result. Examples of the rendering data include texture data for mapping the polygons and shading data.

Reference numeral 14 is a collision detection unit for detecting a collision between the human body model and the garment. A moving unit 16 is for moving the end of each part of the garment toward a joining line, and causes the collision detection unit 14 to detect a collision when the end of each part collides with the human body model in the course of joining the parts. The joining line is a line expressing a virtual joining portion between the parts, but a row of points for joining the parts may be used instead of the line. When the collision is detected, the moving unit 16 moves each of the parts of the garment so as to reflect it on the surface of the human body model, and moves each part until the ends of the parts come into contact with one another at the joining line. An initial movement unit 18 moves the parts to the outside of the human body model so that the human body model does not interfere with the parts when the parts are initially arranged at the periphery of the human body model. Each of the parts of the garment is disposed' at the periphery of the human body model by means of the manual input 4 or the like. At this moment, when the parts are in contact with or embedded in the human body model, the human body model interferes with the parts. The collision detection unit 14 detects such interference, and the initial movement unit 18 moves the interfering parts away from the human body model to avoid interference.

A joining line processing unit 20 generates the joining line and moves the joining line in accordance with the movement of the parts. For example, when joining two parts, the joining line is the line created between the ends of the two parts to be joined, that is, the line that connects the points that are equally distant from the ends of the two parts. When the parts are moved by the moving unit 16, the joining line is moved or regenerated accordingly. Meanwhile, when the parts, especially the ends of the parts collide with the human body model, the parts are reflected on the surface of the human body model. Note that when the joining line exists inside the human body model, the joining line may be taken out of the human body model so that the parts are not reflected in the course of moving the parts toward the joining line. In this case, for example, the joining line is moved perpendicularly to a line segment connecting the two ends, up to a position where a line connecting the joining line and the end of each part does not interfere with the human body model.

A main simulation unit 22 simulates dressing of the human body model in the virtual garment obtained after joining the parts. This simulation is conducted in consideration of, for example, a strain generated according to the positional relationship among the polygons of each part, the gravity acting on the polygons, repulsion force generated as a result of interference between the parts and the human body model, and frictional force between the human body model and the garment or between garments. This simulation itself is well-known from Patent Documents 1 and 2 mentioned above. A polygon management unit 24 generates a polygon in each part of the garment, uses a rough polygon in a series of steps up to the joining of the parts and uses a fine polygon in the simulation step performed by the main simulation unit 22, so that the series of processes up to the joining of the parts can be executed in a short period of time and so that precise simulation can be conducted.

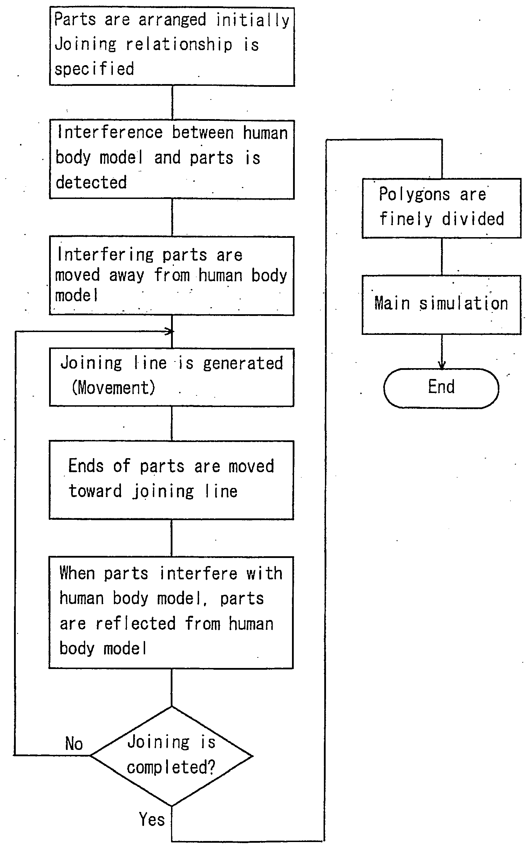

Fig. 2 shows a simulation algorithm. The parts of the garment are initially arranged on the human body model, and a joining relationship is specified. It should be noted that underwear or other garment may be put on the human body model beforehand, and then each of the parts of the garment may be layered on top of the underwear or other garment. The parts may be arranged in contact with the human body model or embedded in the human body model. Interference between each part and the human body model is detected, and interfering parts are moved away from the human body model. Here, it is preferred that not only the interfering sections of the parts but also the entire interfering parts be moved away from the human body model so that the parts are not deformed significantly.

Next, in order to join the ends of the parts together, the joining line is generated between these ends. Then, the ends of the parts are moved toward the joining line. When the ends of the parts interfere with the human body model at this moment, the parts are reflected from the human body model. Furthermore, other portions of the parts are similarly moved as the ends of the parts are moved. Then, when the ends of the parts approach close enough to be joined, the movement of the parts is ended, and the parts are joined together. Thereafter, the polygons are broken up to execute main simulation.

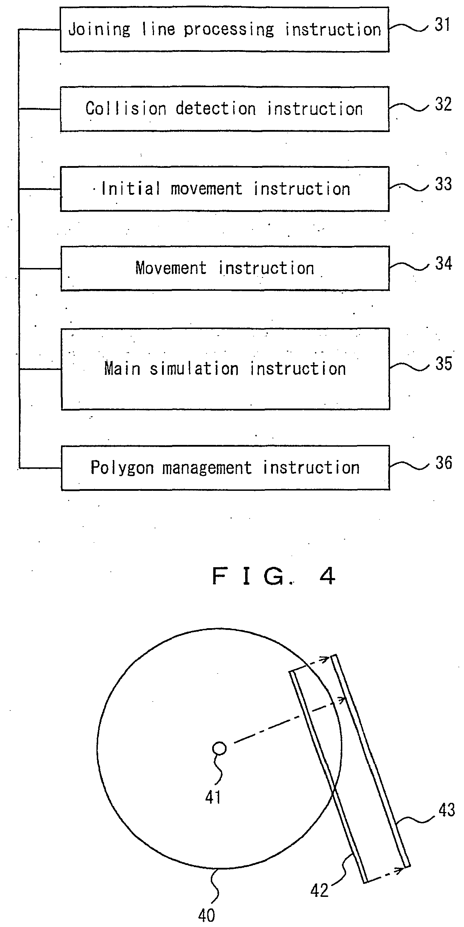

Fig. 3 shows a simulation program. The dressing simulation apparatus 2 is configured by a computer, and the simulation program executes the following instructions stored in the simulation apparatus 2. The simulation program also supplies [the instructions] to the simulation apparatus 2 by means of a storage medium such as a CDROM or a carrier wave. A joining line processing instruction 31 generates the joining line between the ends of the parts to be joined, and, when the ends of the parts are moved, moves the joining line accordingly. A collision detection instruction 32 detects a collision between the human body model and the parts. The collision described here means not only that the human body model and the parts are in contact with each other, but also that the parts are embedded in the human body model. An initial movement instruction 33 initially moves the parts interfering with the human body model to the outside of the human body model. A movement instruction 34 moves the parts toward the joining line, and reflects the parts on the surface of the human body model when the parts collide with the human body model while moving. A main simulation instruction 35 moves the parts to a joining position and executes dressing simulation on the garment in which the parts are virtually joined together. A polygon management instruction 36 divides each of the parts of the garment into a plurality of polygons. The size of each polygon is rougher than the size obtained in the main simulation, until the joining of the parts is performed.

Fig. 4 shows an example of initial movement, wherein reference numeral 40 represents, for example, an arm of the human body model, and 41 an axis of the human body model, which is an axis of the arm. When it is detected that a part 42 is embedded in the human body model 40, the entire part 42 is moved parallel away from the axis 41 to, for example, the position of a part 43.

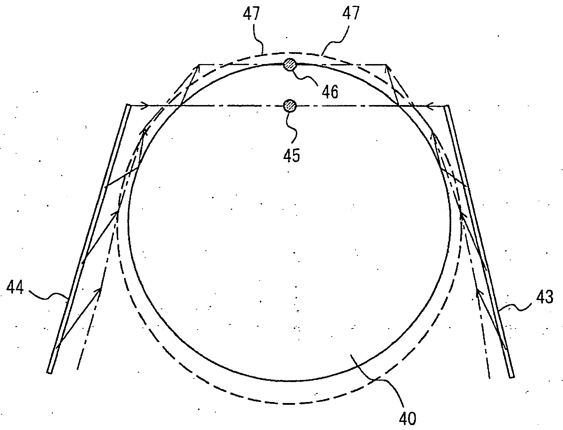

Fig. 5 shows how the parts are moved using the joining line, wherein the human body model 40 has parts 43 and 44 on both left and right sides. For example, upper ends of the parts 43 and 44 are joined together, and a joining line 45 is formed therebetween. When the upper ends of the parts 43 and 44 are moved toward the joining line 45, the parts 43 and 44 are reflected as shown Fig. 5 because the- parts 43 and 44 interfere with the human body model. Here, the incidence angle and reflection angle of the end of each part may or may not be made equal to each other with respect to the surface of the human body model, but the angles may not be needed to be equal to each other. When the ends of the parts 43 and 44 are moved, the other polygons are also moved accordingly. For example, the polygons in the vicinity of the ends of the parts 43 and 44 are fixed, and the ends of the parts 43 and 44 are moved as the other polygons are drawn to the polygons at the ends by elastic force between the polygons.

Next, the joining line 45 is moved to a joining line 46 in relation to the moved ends. Then, the left and right parts are moved toward the joining line 46. By repeating this process, the parts can be joined together at the periphery of the human body model 40 to form a part 47. Note that lower ends of the parts 43 and 44 may be joined together at the same time the upper ends are joined together, or the lower ends may be joined after the upper ends are joined together. Some parts have cut lines therein, as in a dart. Therefore, joining within the parts may be executed in priority to joining the parts together.

In the embodiment, the joining line is generated in the middle of the line connecting the ends of the parts together, the parts are then moved toward the joining line, and then the parts are reflected when the parts collide with the human body model. Instead of reflecting the parts, the direction of moving the ends of the parts may be changed so that the parts do not come into contact with the human body model. In case of Fig. 5, for example, instead of moving the ends of the parts horizontally toward the joining line 45, the ends may be moved in a tangential direction toward the human body model 40 as seen from the parts 43 and 44.

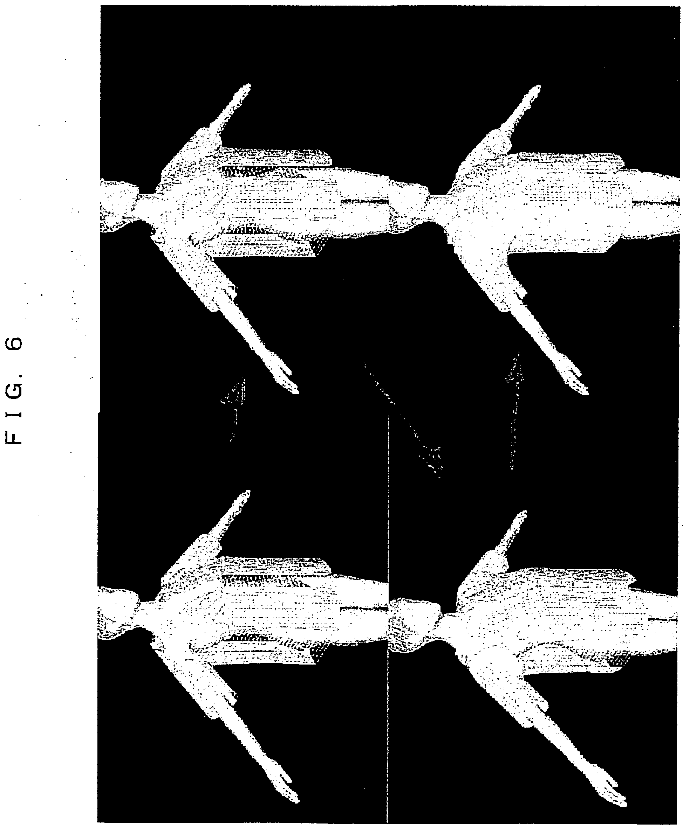

Fig. 6 shows the processes ranging from initially arranging the parts to joining the parts. In the upper left of the diagram, the parts interfere with the human body model at the chest. The parts corresponding to a front body part are moved away from the human body model, and then each part is moved toward the joining line, to obtain the state shown in the lower right of Fig. 6. This state is similar to a state where an arm or body is allowed to pass gently through the garment. By starting the simulation from this state, drapes that are generated by friction with the human body model, gravity acting on the garment, or other small force can be expressed precisely.

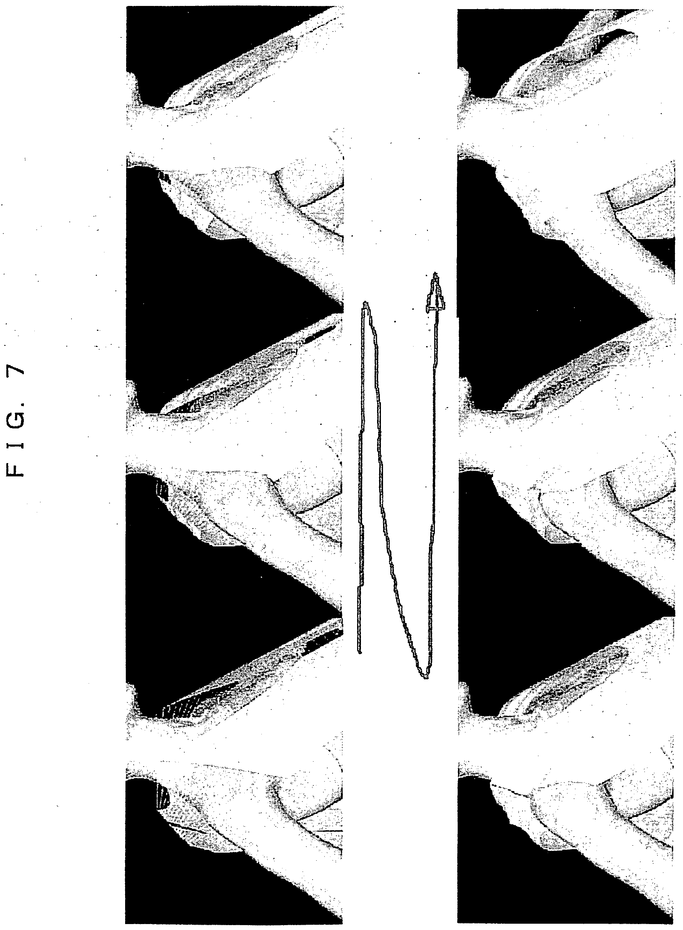

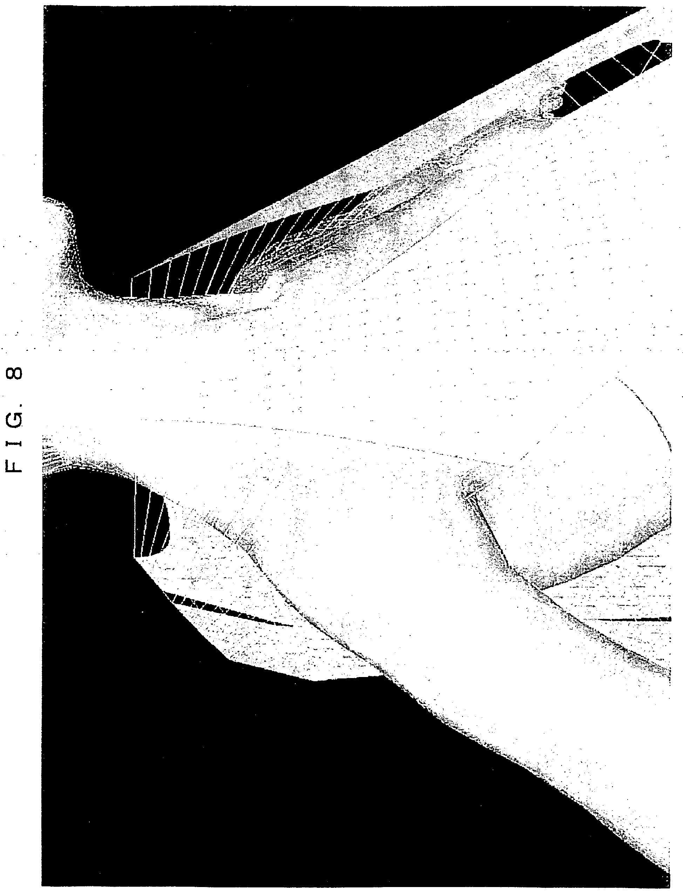

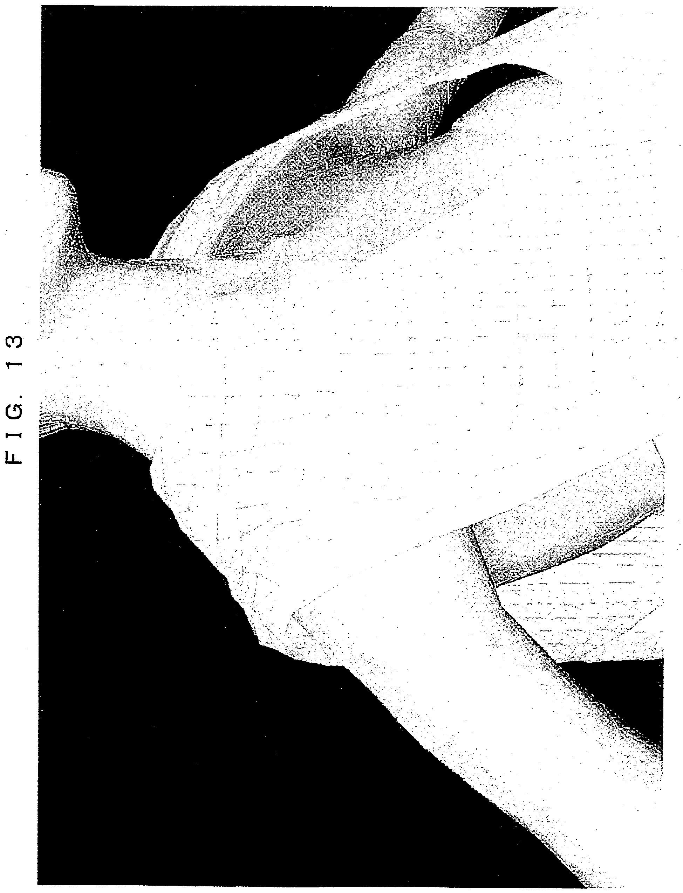

Figs. 7 to 13 show examples of the initial arrangement. Figs. 8 to 13 show the enlargement of the process shown in Fig. 7. During the step shown in Fig. 8, the parts are taken outside the human body model, but a part of the joining line exists inside the human body model. The end of each of the parts is moved toward the joining line, and when the joining line is present outside the human body model the end of each part [is not moved]. When the joining line exists inside the human body model, the end of each part is moved along the human body such that the parts are reflected. In this manner, joining is completed as shown in Fig. 13. In Figs. 8 to 13, the triangles on the human body model or the surface of each part represent the polygons.

The following effects are obtained in this embodiment.
(1) When the parts are initially arranged, the parts may be embedded in the human body model. Therefore, the parts can be arranged easily in the vicinity of the human body model. The parts that are embedded in the human body model are moved to a position where the parts do not interfere with the human body model.
(2) When the parts are moved toward the joining line and interfere with the human body model while moving, the direction of moving the ends of the parts are corrected so that the parts can be joined naturally in the vicinity of the surface of the human body model.
(3) The polygons of each part can be rough until joining of the parts is carried out, and the distance that the parts are moved in one step can be made longer than that obtained in the main simulation, whereby the parts can be joined in a short period of time.
(4) The time required in the processes prior to the start of the main simulation can be reduced by performing (1) to (3).
(5) Once the parts are joined, the shape of the garment is relatively natural with no unnatural forms. When the main simulation is executed from such a state, drapes are generated naturally, and the simulation can be conducted realistically. In the inventors' experience, when carrying out the process for joining the parts together inside the human body model without carrying out the initial movement of the parts and then taking out the parts to the outside the human body model after the joining, drapes could not be expressed most of the time.

## Claims

1. A dressing simulation apparatus (2) for joining virtual shaped parts (43, 44) of a garment arranged at a periphery of a human body model (40), and simulating dressing of the human body model (40) in the virtual garment obtained after a joining of ends to be joined of the virtual parts (43, 44), the dressing simulation apparatus (2) comprising:
means adapted to generate a virtual joining portion in the middle of a virtual gap between ends contiguous of two parts (43, 44) to be joined, such that the virtual joining portion consists of a joining line connecting points that are equally distant from the ends of the two parts to be joined;
means adapted to move the ends of the two parts (43, 44) toward the virtual joining portion; and
means adapted to move other portions of the two parts (43, 44) in accordance with positions of the ends, and when the parts (43, 44) interfere with the human body model (40), the means adapted to move are configured to reflect the parts (43, 44) from the human body model (40), and
if joining is not completed, the means adapted to generate the virtual joining portion are configured to move the joining line perpendicularly to a line segment connecting the two ends, up to a position where a line connecting the joining line and the end of each part (43, 44) does not interfere with the human body model (40);
wherein the generation of the virtual joining portion and the movement of the ends are repeated at least once until the two parts (43, 44) come into contact with one another.

2. The dressing simulation apparatus (2) according to claim 1, **characterized in** further comprising:
means adapted to detect interference between the human body model (40) and the parts (43, 44); and
means adapted to, before the ends are moved, move the parts (43, 44) interfering with the human body model (40), away from the human body model (40) to a position where the interference is eliminated.

3. The dressing simulation apparatus (2) according to claim 1 or 2, wherein each of the parts (43, 44) is configured by a plurality of polygons, and the dressing simulation apparatus (2) further comprises means adapted to break up the polygons after the two parts (43, 44) are joined together.

4. A dressing simulation method for joining virtual shaped parts (43, 44) of a garment arranged at a periphery of a human body model (40), and simulating dressing of the human body model (40) in the virtual garment obtained after a joining of ends to be joined of the virtual parts (43, 44), the dressing simulation method comprising the steps of:
generating a virtual joining portion in the middle of a virtual gap between contiguous ends of two parts (43, 44) to be joined, such that the virtual joining portion consists of a joining line connecting points that are equally distant from the ends of two parts to be joined;
moving the ends of the two parts (43, 44) toward the virtual joining portion;
moving other portions of the two parts (43, 44) in accordance with positions of the ends, and when the parts (43, 44) interfere with the human body model (40), reflecting the parts (43, 44) from the human body model (40), and
if joining is not completed, moving the joining line perpendicularly to a line segment connecting the two ends, up to a position where a line connecting the joining line and the end of each part (43, 44) does not interfere with the human body model (40); and
repeating a generation of the virtual joining portion and a movement of the ends, at least once until the two parts (43, 44) come into contact with one another.

5. A dressing simulation program executed by a digital information processing device to join virtual shaped parts (43, 44) of a garment arranged at a periphery of a human body model (40), and to simulate dressing of the human body model (40) in the virtual garment obtained after a joining of ends to be joined of the virtual parts (43, 44), the dressing simulation program comprising:
an instruction to generate a virtual joining portion in the middle of a virtual gap between ends contiguous of two parts (43, 44) to be joined, such that the virtual joining portion consists of a joining line connecting points that are equally distant from the ends of the two parts to be joined;
an instruction to move the ends of the two parts (43, 44) toward the virtual joining portion;
an instruction to move other portions of the two parts (43, 44) in accordance with positions of the ends, and
when the parts (43, 44) interfere with the human body model (40), an instruction to reflect the parts (43, 44) from the human body model (40), and
if joining is not completed, an instruction to move the joining line perpendicularly to a line segment connecting the two ends, up to a position where a line connecting the joining line and the end of each part (43, 44) does not interfere with the human body model (40); and
an instruction to repeat a generation of the virtual joining portion and a movement of the ends, to be performed at least once until the two parts (43, 44) come into contact with one another.

## Patentansprüche

1. Ankleidesimulationsvorrichtung (2) zum Verbinden von virtuell geformten Teilen (43, 44) eines Kleidungsstücks, die an einem Umfang eines Menschenkörpermodells (40) angeordnet sind, und zum Simulieren eines Ankleidens des Menschenkörpermodells (40) mit einem virtuellen Kleidungsstück, das durch das Verbinden von zu verbindenden Enden der virtuellen Teile (43, 44) erhalten wird, wobei die Ankleidesimulationsvorrichtung (2) umfasst:
Einrichtungen zum Erzeugen eines virtuellen Verbindungsteils in der Mitte eines virtuellen Abstands zwischen einander zugewandten Enden von zwei miteinander zu verbindenden Teilen (43, 44), sodass der virtuelle Verbindungsteil aus einer Verbindungslinie besteht, die gleich weit von den Enden der zwei miteinander zu verbindenden Teile beabstandet ist,
Einrichtungen zum Bewegen der Enden der zwei Teile (43, 44) zu dem virtuellen Verbindungsteil, und
Einrichtungen zum Bewegen von anderen Abschnitten der zwei Teile (43, 44) in Entsprechung zu den Positionen der Enden, wobei, wenn die Teile (43, 44) mit dem Menschenkörpermodell (40) kollidieren, die Einrichtungen zum Bewegen konfiguriert sind zum Zurückziehen der Teile (43, 44) von dem Menschenkörpermodell (40), und
wenn das Verbinden nicht abgeschlossen ist, die Einrichtungen zum Erzeugen eines virtuellen Verbindungsteils konfiguriert sind zum Bewegen der Verbindungslinie senkrecht zu einem die zwei Enden verbindenden Liniensegment nach oben zu einer Position, an der eine die Verbindungslinie und das Ende jedes Teils (43, 44) verbindende Linie nicht mit dem Menschenkörpermodell (40) kollidiert,
wobei das Erzeugen des virtuellen Verbindungsteils und das Bewegen der Enden mindestens einmal wiederholt werden, bis die zwei Teile (43, 44) in Kontakt miteinander kommen.

2. Ankleidesimulationsvorrichtung (2) nach Anspruch 1, weiterhin **gekennzeichnet durch**:
Einrichtungen zum Erfassen einer Kollision zwischen dem Menschenkörpermodell (40) und den Teilen (43, 44), und
Einrichtungen zum, bevor die Enden bewegt werden, Bewegen der mit dem Menschenkörpermodell (40) kollidierenden Teile (43, 44) weg von dem Menschenkörpermodell (40) zu einer Position, an der die Kollision aufgehoben ist.

3. Ankleidesimulationsvorrichtung (2) nach Anspruch 1 oder 2, wobei jeder der Teile (43, 44) durch eine Vielzahl von Polygonen konfiguriert wird und die Ankleidesimulationsvorrichtung (2) weiterhin Einrichtungen zum Aufbrechen der Polygone, nachdem die zwei Teile (43, 44) miteinander verbunden wurden, umfasst.

4. Ankleidesimulationsverfahren zum Verbinden von virtuell geformten Teilen (43, 44) eines Kleidungsstücks, die an einem Umfang eines Menschenkörpermodells (40) angeordnet sind, und zum Simulieren eines Ankleidens des Menschenkörpermodells (40) mit einem virtuellen Kleidungsstück, das durch das Verbinden von zu verbindenden Enden der virtuellen Teile (43, 44) erhalten wird, wobei das Ankleidesimulationsverfahren die folgenden Schritte umfasst:
Erzeugen eines virtuellen Verbindungsteils in der Mitte eines virtuellen Abstands zwischen einander zugewandten Enden von zwei miteinander zu verbindenden Teilen (43, 44), sodass der virtuelle Verbindungsteil aus einer Verbindungslinie besteht, die gleich weit von den Enden der zwei miteinander zu verbindenden Teile beabstandet ist,
Bewegen der Enden der zwei Teile (43, 44) zu dem virtuellen Verbindungsteil, und
Bewegen von anderen Abschnitten der zwei Teile (43, 44) in Entsprechung zu den Positionen der Enden, und, wenn die Teile (43, 44) mit dem Menschenkörpermodell (40) kollidieren, Zurückziehen der Teile (43, 44) von dem Menschenkörpermodell (40),
wenn das Verbinden nicht abgeschlossen ist, Bewegen der Verbindungslinie senkrecht zu einem die zwei Enden verbindenden Liniensegment nach oben zu einer Position, an der eine die Verbindungslinie und das Ende jedes Teils (43, 44) verbindende Linie nicht mit dem Menschenkörpermodell (40) kollidiert, und
Wiederholen des Erzeugens des virtuellen Verbindungsteils und des Bewegens der Enden mindestens einmal, bis die zwei Teile (43, 44) in Kontakt miteinander kommen.

5. Ankleidesimulationsprogramm, das durch eine digitale Informationsverarbeitungsvorrichtung ausgeführt wird zum Verbinden von virtuell geformten Teilen (43, 44) eines Kleidungsstücks, die an einem Umfang eines Menschenkörpermodells (40) angeordnet sind, und zum Simulieren eines Ankleidens des Menschenkörpermodells (40) mit einem virtuellen Kleidungsstück, das durch das Verbinden von zu verbindenden Enden der virtuellen Teile (43, 44) erhalten wird, wobei das Ankleidesimulationsprogramm umfasst:
einen Befehl zum Erzeugen eines virtuellen Verbindungsteils in der Mitte eines virtuellen Abstands zwischen einander zugewandten Enden von zwei miteinander zu verbindenden Teilen (43, 44), sodass der virtuelle Verbindungsteil aus einer Verbindungslinie besteht, die gleich weit von den Enden der zwei miteinander zu verbindenden Teile beabstandet ist,
einen Befehl zum Bewegen der Enden der zwei Teile (43, 44) zu dem virtuellen Verbindungsteil,
einen Befehl zum Bewegen von anderen Abschnitten der zwei Teile (43, 44) in Entsprechung zu den Positionen der Enden,
wenn die Teile (43, 44) mit dem Menschenkörpermodell (40) kollidieren, einen Befehl zum Zurückziehen der Teile (43, 44) von dem Menschenkörpermodell (40),
wenn das Verbinden nicht abgeschlossen ist, einen Befehl zum Bewegen der Verbindungslinie senkrecht zu einem die zwei Enden verbindenden Liniensegment nach oben zu einer Position, an der eine die Verbindungslinie und das Ende jedes Teils (43, 44) verbindende Linie nicht mit dem Menschenkörpermodell (40) kollidiert, und
einen Befehl zum Wiederholen des Erzeugens des virtuellen Verbindungsteils und des Bewegens der Enden mindestens einmal, bis die zwei Teile (43, 44) in Kontakt miteinander kommen.

## Revendications

1. Dispositif de simulation de port de vêtement (2) pour joindre des parties virtuelles mises en forme (43, 44) d'un vêtement agencé au niveau d'une périphérie d'un modèle de corps humain (40), et simuler le port d'un vêtement par le modèle de corps humain (40) avec le vêtement virtuel obtenu après une jonction d'extrémités à joindre des parties virtuelles (43, 44), le dispositif de simulation de port de vêtement (2) comprenant :
des moyens adaptés à générer une portion de jonction virtuelle au milieu d'un intervalle virtuel entre des extrémités contiguës de deux parties (43, 44) à joindre, de telle sorte que la portion de jonction virtuelle soit constituée d'une ligne de jonction connectant des points qui sont équidistants des extrémités des deux parties à joindre ;
des moyens adaptés à déplacer les extrémités des deux parties (43, 44) vers la portion de jonction virtuelle ; et
des moyens adaptés à déplacer d'autres portions des deux parties (43, 44) en accord avec les positions des extrémités, et lorsque les parties (43, 44) interfèrent avec le modèle de corps humain (40), les moyens adaptés à déplacer sont agencés pour réfléchir les parties (43, 44) à partir du modèle de corps humain (40), et
si la jonction n'est pas terminée, les moyens adaptés à générer la portion de jonction virtuelle sont agencés pour déplacer la ligne de jonction perpendiculairement à un segment de ligne connectant les deux extrémités, jusqu'à une position où une ligne connectant la ligne de jonction et l'extrémité de chaque partie (43, 44) n'interfère pas avec le modèle de corps humain (40) ;
dans lequel la génération de la portion de jonction virtuelle et le mouvement des extrémités sont répétés au moins une fois jusqu'à ce que les deux parties (43, 44) viennent en contact entre elles.

2. Dispositif de simulation de port de vêtement (2) selon la revendication 1, **caractérisé en ce qu'**il comprend en outre :
des moyens adaptés à détecter des interférences entre le modèle de corps humain (40) et les parties (43, 44) ; et
des moyens adaptés à, avant que les extrémités soient déplacées, déplacer les parties (43, 44) interférant avec le modèle de corps humain (40) hors du modèle de corps humain (40) vers une position où l'interférence est éliminée.

3. Dispositif de simulation de port de vêtement (2) selon la revendication 1 ou 2, dans lequel chacune des parties (43, 44) est agencée sous forme d'une pluralité de polygones, et le dispositif de simulation de port de vêtement (2) comprend en outre des moyens adaptés à briser les polygones après que les deux parties (43, 44) ont été jointes.

4. Procédé de simulation de port de vêtement pour joindre des parties virtuelles mises en forme (43, 44) d'un vêtement agencé au niveau d'une périphérie d'un modèle de corps humain (40), et simuler le port d'un vêtement par le modèle de corps humain (40) avec le vêtement virtuel obtenu après une jonction d'extrémités à joindre des parties virtuelles (43, 44), le procédé de simulation de port de vêtement comprenant les étapes suivantes :
générer une portion de jonction virtuelle au milieu d'un intervalle virtuel entre des extrémités contiguës de deux parties (43, 44) à joindre, de telle sorte que la portion de jonction virtuelle soit constituée d'une ligne de jonction connectant des points qui sont équidistants des extrémités des deux parties à joindre ;
déplacer les extrémités des deux parties (43, 44) vers la portion de jonction virtuelle ; et
déplacer d'autres portions des deux parties (43, 44) en accord avec les positions des extrémités, et lorsque les parties (43, 44) interfèrent avec le modèle de corps humain (40), réfléchir les parties (43, 44) à partir du modèle de corps humain (40), et
si la jonction n'est pas terminée, déplacer la ligne de jonction perpendiculairement à un segment de ligne connectant les deux extrémités, jusqu'à une position où une ligne connectant la ligne de jonction et l'extrémité de chaque partie (43, 44) n'interfère pas avec le modèle de corps humain (40) ; et
répéter la génération de la portion de jonction virtuelle et le mouvement des extrémités au moins une fois jusqu'à ce que les deux parties (43, 44) viennent en contact entre elles.

5. Programme de simulation de port de vêtement exécuté par un dispositif de traitement d'informations numériques pour joindre des parties virtuelles mises en forme (43, 44) d'un vêtement agencé au niveau d'une périphérie d'un modèle de corps humain (40), et pour simuler le port d'un vêtement par le modèle de corps humain (40) avec le vêtement virtuel obtenu après une jonction d'extrémités à joindre des parties virtuelles (43, 44), le programme de simulation de port de vêtement comprenant :
une instruction pour générer une portion de jonction virtuelle au milieu d'un intervalle virtuel entre des extrémités contiguës de deux parties (43, 44) à joindre, de telle sorte que la portion de jonction virtuelle soit constituée d'une ligne de jonction connectant des points qui sont équidistants des extrémités des deux parties à joindre ;
une instruction pour déplacer les extrémités des deux parties (43, 44) vers la portion de jonction virtuelle ;
une instruction pour déplacer d'autres portions des deux parties (43, 44) en accord avec les positions des extrémités, et
lorsque les parties (43, 44) interfèrent avec le modèle de corps humain (40), une instruction pour réfléchir les parties (43, 44) à partir du modèle de corps humain (40), et
si la jonction n'est pas terminée, une instruction pour déplacer la ligne de jonction perpendiculairement à un segment de ligne connectant les deux extrémités, jusqu'à une position où une ligne connectant la ligne de jonction et l'extrémité de chaque partie (43, 44) n'interfère pas avec le modèle de corps humain (40) ; et
une instruction pour répéter la génération de la portion de jonction virtuelle et le mouvement des extrémités à réaliser au moins une fois jusqu'à ce que les deux parties (43, 44) viennent en contact entre elles.
